# EUROPEAN PATENT APPLICATION

(11) **EP 2 567 936 A1**
(43) Date of publication of application: **13.03.2013**
(21) Application number: 11777308.5
(22) Date of filing: 03.05.2011
(51) Int. Cl.: B82B 3/00, C08K 11/00, C08J 3/22, C08L 101/00

(54) **PROCEDURE FOR THE OBTAINMENT OF NANOCOMPOSITE MATERIALS**

(30) Priority: 04.05.2010 ES 201030663
(71) Applicant: Consejo Superior De Investigaciones Científicas (CSIC), 28006 Madrid (ES)
(72) Inventor: LAGARON CABELLO, José María, E-46980 Paterna (Valencia) (ES); MARTÍNEZ SANZ, Marta, E-46980 Paterna (Valencia) (ES); LÓPEZ RUBIO, Amparo, E-46980 Paterna (Valencia) (ES)
(74) Representative: Ungria López, Javier
(86) International application number: PCT/ES2011/070313
(87) International publication number: WO 2011/138485

(57) **Abstract**

The present invention relates to a procedure for the obtainment of a nanocomposite material through the technique of melt mixing comprising a polymeric matrix and a nanoreinforcement which has been previously dispersed in the same plastic or other matrix by means of electrospinning methods.

## Description

The present invention relates to a procedure for the obtainment of a nanocomposite material obtained through the technique of melt mixing comprising a polymeric matrix and a nanoreinforcement, which has been previously dispersed in the same plastic or other matrix by means of electrospinning methods.

### STATE OF THE ART

Nanocomposites are materials that have gained great importance in the last few years and have been the subject of numerous studies due to their ability to provide new properties to a certain material. In particular, polymeric nanocomposites consist of a matrix of plastic origin that contains reinforcement particles with at least one dimension in the nanometer range. One of the main problems in the manufacture of polymeric nanocomposites lies in the incompatibility between matrix and nanoreinforcement. Since the normally used reinforcements, such as clays or cellulose nanofibers (also called "nanowhiskers"), are hydrophilic in nature, it is difficult to disperse them properly in polymeric matrices of predominantly hydrophobic nature. A good dispersion of the nanoreinforcements is essential to achieve significant improvements in the mechanical properties of the material to be reinforced. With the purpose of improving the dispersion, the most commonly used alternative is the dispersion of the nanoreinforcement in a solvent compatible with the polymeric matrix by means of the chemical modification of the surface of the particles or the addition of a surfactant and the later incorporation into the matrix through the technique of casting (plate casting and film formation by solvent evaporation). However, several studies have confirmed that the modified nanoparticles have less reinforcement effect than those non-modified. Other alternatives are the crosslinking of the reinforcement with the matrix and processing by melt mixing.

The article from Petersson et al. Compos. Sci. Technol., 2007, 67, 2535-2544 describes a process for the production of nanocomposites based on a polylactic acid matrix (PLA) reinforced with cellulose nanofibers by means of casting. The nanofibers were subjected to a treatment with tert-butanol or with a surfactant to disperse them in the solvent and they were subsequently incorporated into the polymeric matrix through the technique of casting using chloroform as a solvent. However, it was not possible to completely prevent the agglomeration of the crystals.

The article from Grunert, M.; Winter, W.T. J. Polym. Environ., 2002, 10, 27-30, describes a process for the incorporation of bacterial cellulose nanofibers in a cellulose acetate butyrate matrix (CAB) by means of casting. The cellulose nanofibers showed a tendency to agglomerate. By means of chemical modification of the surface of the nanofibers the dispersion was improved. However, the chemically modified nanofibers had worse reinforcement properties.

Patent US2010/019204 describes a method for modifying the surface of nanoparticles, thus increasing their ability to disperse in solvents.

Another option consists of the dispersion of hydrophilic reinforcement material in water and subsequently replacing the water with an organic solvent compatible with the polymeric matrix. Patent MX2009/005742 describes a method for preparing compositions of reinforcements useful for the production of polymeric nanocomposites using the solvent exchange method.

Patent US2008/108772 describes a method for the production of nanocomposites with PLA matrix and microcrystalline cellulose (MCC) as reinforcement material using melt mixing. The reinforcement material was subjected to a treatment with N,N-dimethylacetamide (DMAc) and lithium chloride (LiCl) to partially separate the cellulose nanofibers. The suspension of nanofibers was mixed with the polymeric matrix in an extruder using the technique of melt mixing. It was noted that the treatment with DMAc/LiCl causes the degradation of nanocomposites at high temperatures. In addition, the dispersion of the nanofibers is not complete and therefore, there was not a considerable improvement in the mechanical properties.

Bodenson and Oksman in Compos. Sci. Technol., 2006, 66, 2776-2784, also investigated the possibility of improving the dispersion of the nanofibers using polyvinyl alcohol (PVOH). It was observed that when the extruder was fed with a mixture of nanofibers and PVOH both in the form of spray-dried powders and in the form of suspension, a phase separation occurred consisting of a PVOH phase in which most of the nanofibers were concentrated and a PLA phase.

Patent US2008/108772 describes a method for the production of a polymeric material reinforced by means of mixing a dispersion containing a plasticizer and cellulose nanofibers and a polymeric matrix. The nanofibers are dispersed in solution and are introduced into an extruder in which the at least partially ground matrix is present. Other examples of obtainment of nanocomposites by means of melt mixing are patents JP2009/045804*,* WO2010/009306 and MX2008/010575*.*

As an alternative to the above methods, the *in situ* polymerization for the obtainment of bacterial cellulose nanocomposites has been proposed. Patent US2009/192264 describes a process for the obtainment of bacterial cellulose nanocomposites through the addition of the polymeric matrix into the culture medium.

### DESCRIPTION OF THE INVENTION

The present invention provides a procedure for the obtainment of a nanocomposite material comprising a polymeric matrix and a nanoreinforcement dispersed in it. The procedure of the invention intends to solve the problem of the difficult dispersion of nanoreinforcements in polymeric matrices by techniques of melt mixing, especially for thermo-sensitive additives.

The present invention consists of the obtainment of new plastic materials reinforced with nanoparticles, preferably with cellulose nanofibers, which provide improved physical properties and renewable and/or biodegradable character to polymeric matrices which are obtained by means of techniques of melt mixing. The dispersion of such nanoparticles is typically performed by means of the incorporation, prior to the mixing with the plastic matrix, of said nanoparticles in electrospun structures.

A first aspect of the present invention relates to a procedure for the obtainment of a nanocomposite comprising a polymeric matrix and a nanoreinforcement (hereinafter, procedure of the invention), comprising the steps:
a) mixing of the nanoreinforcement with a polymeric matrix in liquid state,
b) electrospinning of the dispersion obtained in (a), and
c) melt mixing of the product obtained in step (b) with a polymeric matrix equal to or different from the one used in step (a).

"Nanoreinforcement" in the present invention means the compound or substance with at least one nanometer dimension, less than 100 nm, which has the ability to improve certain physical properties of a material.

The electrospinning is a method that uses an electrical charge for forming (normally at micro or nano scale) structures of controlled morphology in solid state from a polymeric solution or molten polymer. One of the main points of attraction of the technique is that it is a non-invasive process, which allows to work with a wide variety of polymers obtaining electrospun structures in a simple and reproducible way and that does not require the use of chemistry of coagulation or high temperatures to produce said electrospun structures.

In a preferred embodiment the procedure of the invention further comprises a step (d) for the processing of the product obtained in step (c) selected from the list comprising: injection, extrusion, thermoforming, blow moulding, rotational moulding, spinning, casting, calendering, pultrusion and lamination. In a more preferred embodiment the processing is selected from injection, extrusion or blowing.

In a preferred embodiment in addition in step (b) and/or (c) is added at least one additive which is selected from plasticizers, emulsifiers, anti-flocculents, processing aids, antistatics, UV light absorbers, antioxidants, cross-linkers, flame retardants, antibacterial or any of their combinations. This additive can also be a nanoadditive, or any additive used in the industry of the polymers known in the state of the art and said additives can be used to provide better final properties to the nanocomposite or to facilitate its processing.

Preferably step (a) is carried out with a solvent that is selected from an alcohol, water or any of their combinations. More preferably the alcohol is isopropanol.

In a preferred embodiment the polymeric matrix is non-polar.

In the case of being carried out with a non-polar polymeric matrix, in a more preferred embodiment, the procedure of the invention comprises a compatibilization pretreatment prior to step (a) comprising the steps:
i. dissolution of the nanoreinforcement in an aqueous solvent,
ii. elimination of the aqueous solvent, and
iii. addition of an organic solvent.

In a still more preferred embodiment the elimination of the aqueous solvent from step (ii) is performed by a method selected from decantation, extraction, centrifugation or any of their combinations.

Generally these electrospun structures are obtained by dispersion of the nanoreinforcements and the polymeric matrix in polar media, which as described previously are preferably water, alcohols or mixtures of the same, where the polymeric matrix is soluble in such solvents.

Alternatively, for the case of polymeric matrices not soluble in said polar media, a step of compatibilization treatment can be carried out prior to the mixing with the polymeric matrix of the nanoreinforcement, in which an exchange of the solvent from polar to non-polar is carried out, as described above. This exchange of the solvent can be conducted by any method known by any person skilled in the art used for this purpose, such as centrifugation followed by elimination of the polar solvent by decantation or extraction and subsequent additional dispersion of the nanoreinforcements in non-polar solvents. This alternative step has as objective the obtainment of a dispersion of the nanoreinforcement in non-polar solvent with the purpose of making these compatible with the polymeric matrix not soluble in polar media.

Preferably in step (a) of mixing, the percentage of the polymeric matrix in the solvent is of between 0.1% and 95% by weight.

In a preferred embodiment the percentage by weight of the nanoreinforcement with respect to the polymeric matrix is of between 0.01 % up to 99%. And in a more preferred embodiment said percentage by weight of the nanoreinforcement in the nanocomposite is of between 0.1 and 60%.

In another preferred embodiment, the procedure of the invention further comprises a step of acid treatment of the nanoreinforcement prior to step (a) for the obtainment of the nanoreinforcement. This acid treatment can be by acid hydrolysis, since it promotes the reduction of the nanoreinforcement size, which can be followed by neutralization. After several cycles of centrifugation and washing is obtained a suspension of the nanoreinforcement in polar medium or, by drying of the same, typically by means of freeze-drying, a powder of nanofibers is obtained. If the material is in powder form, a dispersion of the nanoreinforcement in a solvent that will be preferably polar is subsequently prepared.

In another preferred embodiment in step (a) of mixing is included a treatment of homogenization by stirring and/or ultrasound. The stirring can be vigorous to favour the dispersion of the nanoreinforcement in the polymeric matrix.

During step (b) of electrospinning an effective incorporation of the nanoreinforcement in the material that will be used as polymeric matrix during the next step of melt mixing is achieved.

Preferably the electrospinning of step (b) is carried out at a distance between the capillary and the support of between 0.1 and 200 cm, and more preferably between 5 and 50 cm.

Another variable to be controlled in electrospinning of step (b) is the deposition rate which may be between 0.001 and 100 ml/hr, and more preferably between 0.01 and 10 ml/hr.

Also the electrospinning of step (b) is preferably carried out by applying a voltage between 0.1 and 1000 kV, and more preferably between 5 and 30 kV.

In step (c) the product obtained in step (b) is added electrospun as such or ground by any method known in the state of the art, until obtaining the desired grain size. The step (c) of mixing will develop typically by either mono or double spindle extrusion techniques, followed by a pelletizing process to obtain a "masterbatch" (enriched in reinforcement) or to obtain the reinforcement final concentration desired.

In a preferred embodiment the nanoreinforcement is selected from spherical, fibrillar, tubular, lamellar nanostructures or any of their combinations. In a more preferred embodiment the fibrillar nanostructures are made of cellulose, and said cellulose can have a bacterial or plant origin.

Preferably the polymeric matrix is selected from the list comprising: polyolefins, polyesters, polyamides, polyimides, polyketones, polyisocyanates, polysulphones, styrenic plastics, phenolic resins, amide resins, urea resins, melamine resins, polyester resins, epoxidic resins, polycarbonates, polyvinylpyrrolidones, epoxy resins, polyacrylates, rubbers and gums, polyurethanes, silicones, aramids, polybutadiene, polyisoprenes, polyacrylonitriles, polyvinyl difluoride (PVDF), polyvinyl acetate (PVA), polyvinyl alcohol (PVOH), ethylene vinyl alcohol (EVOH), vinyl polychloride (PVC), polyvinyldiene chloride (PVDC), biomass derivatives, proteins, polysaccharides, lipids, biopolyesters or any of their combinations.

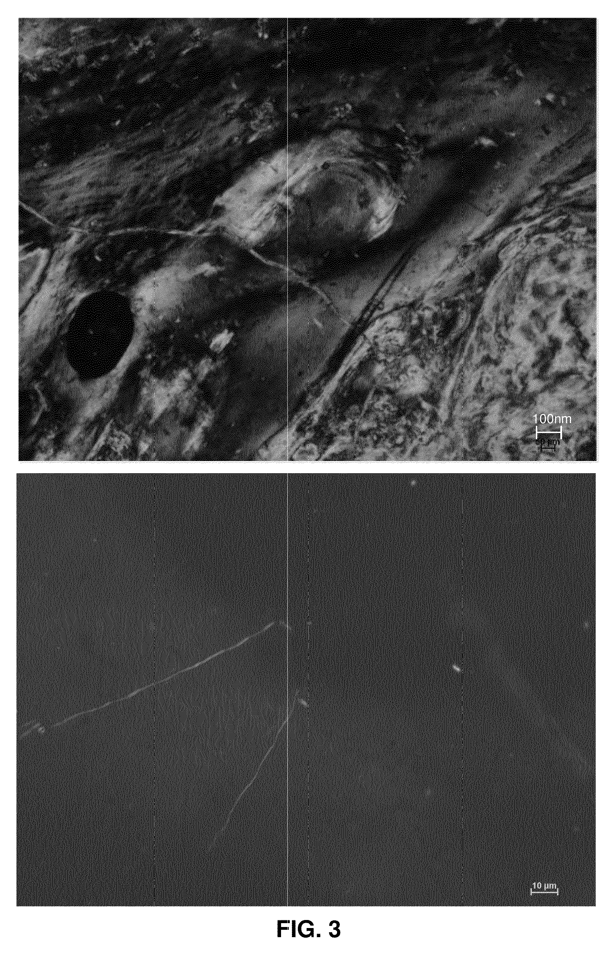

A second aspect of the present invention relates to a nanocomposite obtainable by the procedure of the invention with improved physical properties provided by the excellent dispersion of the nanoreinforcement in the polymeric matrix. By way of example, the top image of Figure 3 shows the cellulose nanofibers agglomerated in the case of adding them in the form of lyophilized material, while in the case of incorporating said nanofibers in the form of electrospun structures, as shown in the image below, the nanoreinforcement is highly dispersed. In addition, Table 1 shows that for the same amount of nanoreinforcement, the increase in the Tg with respect to the pure EVOH film is not significant in the case that the nanofibers are incorporated in lyophilized form, contrasting with an increase of approximately 14 °C in the case of incorporating cellulose nanofibers in electrospun structures. Therefore, it follows that the dispersion of the nanofibers is considerably improved in the case of incorporating them in electrospun structures, resulting in a considerable increase of the material rigidity.

The present invention consists of the obtainment of new plastic materials reinforced with nanoparticles, preferably with cellulose nanofibers, which provide improved physical properties and renewable and/or biodegradable character to polymeric matrices which are obtained by means of techniques of melt mixing. The dispersion of such nanoparticles is typically performed by means of the incorporation, prior to the mixing with the plastic matrix, of said nanoparticles in electrospun structures.

A third aspect of the present invention relates to the use of the nanocomposite described above for the obtainment of materials for the automotive, aeronautics, textile plastic, paper and cardboard, toys, footwear, packaging, construction, electronics, pharmaceutical or biomedical industry. And in general for all the applications of the plastics and bioplastics requiring enhanced properties or reduction in the consumption of the plastic matrix, since enhanced physical (mechanical, thermal, and barrier) and chemical (resistance to solvents) properties are achieved, with biodegradable, compostable and renewable character of interest in the applications mentioned above.

Throughout the description and the claims the word "comprises" and its variants do not intend to exclude other technical features, additives, components or steps. For the persons skilled in the art, other objects, advantages and features of the invention will follow in part from the description and in part from the practice of the invention. The following examples and drawings are provided by way of illustration, and are not intended to be limiting of the present invention.

### DESCRIPTION OF THE FIGURES

**Fig 1****.** It shows an image of Scanning Electronic Microscopy (SEM) of EVOH electrospun structures and 15% of bacterial cellulose nanofibers.
**Fig. 2****.** It shows an image of Scanning Electronic Microscopy (SEM) of a cryofractured area of EVOH electrospun structures and 15% of bacterial cellulose nanofibers. The figure shows the presence of the nanofibers in the composition of these electrospun structures.
**Fig 3****.** Comparative results of optical microscopy with polarized light showing the best dispersion of the nanofibers obtained in EVOH using the proposed dispersion method.
**Fig. 4****.** TEM that shows the dispersion of the plant cellulose nanofibers previously dispersed in PLA electrospun structures and that were later incorporated in molten state into a PLA matrix by means of the use of an internal mixer.

### EXAMPLES

Next, the invention will be illustrated using tests performed by the inventors, thus demonstrating the specificity and effectiveness of the procedure of the invention for the obtainment of polymeric matrix nanocomposites with excellent dispersion of nanoreinforcements; in particular in the examples described below, the nanoreinforcements are cellulose nanofibers (both plant and bacterial).

### Example 1.

### Incorporation of bacterial cellulose nanofibers into EVOH29 by melt mixing.

A specific application of the invention consists of the incorporation of bacterial cellulose nanofibers into EVOH29 (copolymer of ethylene and vinyl alcohol with 29% mol of ethylene) electrospun structures. Subsequently, these electrospun structures containing the disperse cellulose nanofibers are incorporated into an EVOH29 matrix by means of melt mixing. The mixture obtained is used for the obtainment of polymeric films using compression moulding from the melting.

In this case, the nanoreinforcement consists of nanofibers extracted from bacterial cellulose by means of a treatment with sulphuric acid. Bacterial cellulose, in such an amount that the cellulose/acid ratio is 7 g/I, is immersed in sulphuric acid with a concentration of 301 ml/l, applying a temperature of 50 °C with continuous stirring. The treatment is applied until obtaining a homogeneous solution, thus, the time required for obtaining the nanofibers was 1 day. Then the solution obtained is subjected to four cycles of centrifugation at 12500 rpm, 15 °C and 20 minutes, finally obtaining the cellulose nanofibers in the form of precipitate. The conditions of the acid treatment previously described allow obtaining nanofibers structures with diameters smaller than 100 nm.

In a first step, the solution of nanofibers and EVOH29 that will be used to generate the electrospun structures is prepared. The solvent used is isopropanol/water in a 70/30 ratio (v/v). The concentration of EVOH29 is 5% by weight with respect to the volume of the solvent, while the concentration of cellulose nanofibers is 15% by weight with respect to the weight of EVOH29. The nanofibers are added in the form of precipitate and to facilitate a good dispersion of the same, they are previously homogenized in the corresponding volume of water by means of the use of an Ultra-turrax Homogenizer. Subsequently, the bacterial cellulose nanofibers dispersion in water is dissolved together with isopropanol and EVOH29, subjecting the mixture to a temperature of 100 °C with continuous stirring and reflux.

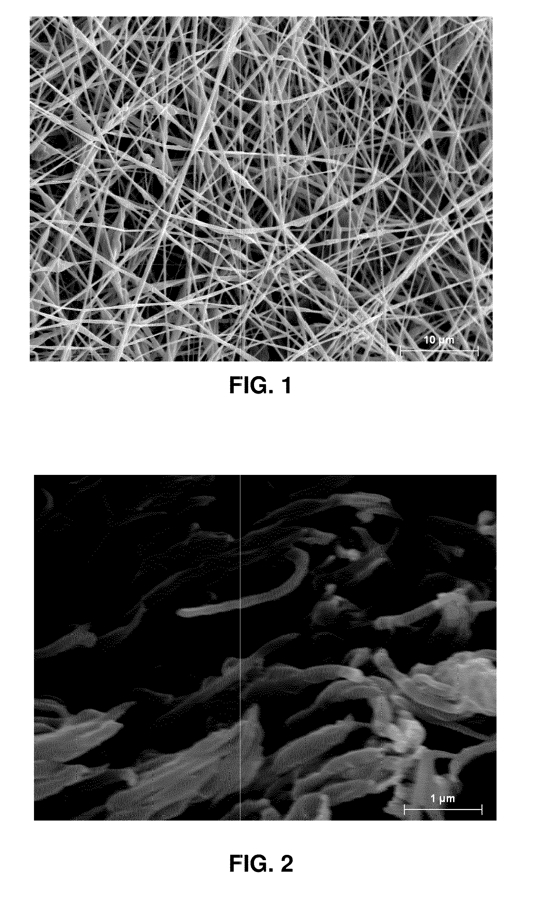

Once the solution has been obtained, it is used to generate hybrid electrospun structures by the technique of electrospinning with a horizontal configuration. The solution is introduced in 5 ml syringes connected through Teflon tubes to a 0.9 mm diameter stainless steel needle. The needle is connected to an electrode which in turn is connected to a power source of 0-30 kV. A voltage comprised between 10-12 kV is applied and the solution is pumped through said needle with a flow of 0.6 ml/hr. The counter electrode is connected to a plate (collector) covered with aluminium foil where the electrospun structures are collected, being the distance between needle and plate of about 12 cm. The process is carried out at room temperature. In this way EVOH29 electrospun structures that contain disperse bacterial cellulose nanofibers are obtained (see Figure 1 and Figure 2). Using the incorporation of 15% nanofibers in the electrospun structures, an increase in the T_{g} of approximately 5 °C with respect to the T_{g} of pure EVOH29 electrospun fibers is achieved.

Once the electrospun structures have been generated, and the good incorporation of the desired amount of nanofibers in the same by means of techniques such as FT-IR has been checked, the next step consists of mixing said electrospun structures that contain the disperse bacterial cellulose nanofibers with the EVOH29 polymeric matrix by means of melt mixing. For this purpose, the desired amount of EVOH29 in the form of pellets is introduced in an internal mixer operating at 190 °C and 60 rpm. When the polymeric matrix is partially melted, the EVOH29/nanofibers electrospun structures are added and a mixing time of 3 minutes is applied. The amount of pelletized EVOH and electrospun structures shall be such that the concentration of cellulose nanofibers in final nanocomposites is 3% by weight.

The last step consisted of the formation of plastic films by means of compression from the melting at a temperature of 185 °C and slow cooling with air and water from the mixture produced. The permeability of the nanocomposite to water vapour was reduced by 60% with respect to the material without nanoreinforcement.

### Example 2.

### Incorporation of plant cellulose nanofibers in EVOH32 by melt mixing.

In this example, the nanoreinforcement consists of nanofibers extracted from highly purified plant cellulose by means of a treatment with sulphuric acid. To do this, 10 g of plant cellulose are added to 100 ml of sulphuric acid with a concentration of 9.1 M. The acid treatment is carried out at a temperature of 44 °C, with continuous stirring, for 130 minutes. The excess of acid is removed by applying several cycles of centrifugation at 13000 rpm for 10 minutes. In each cycle, the supernatant is removed and deionised water is added to the precipitate for further centrifugation. After several cycles of centrifugation, a turbid supernatant is obtained. This supernatant is neutralized until reaching pH 7 and is subsequently lyophilized.

After the obtainment of the plant cellulose nanofibers from highly purified cellulose, similarly to the previous example, a solution of nanofibers and EVOH32 is prepared, from which are generated the electrospun structures. The solvent used is isopropanol/water in a 70/30 ratio (v/v). The EVOH32 concentration is 5% by weight with respect to the volume of the solvent, while the concentration of plant cellulose nanofibers is 8% by weight with respect to the weight of EVOH32. In this case the nanofibers were added in the form of freeze-dried powder, which was previously homogenized and dispersed in the volume of water used in the solution by means of the application of ultrasound. Subsequently, the dispersion of bacterial cellulose nanofibers in water is dissolved together with isopropanol and EVOH32, subjecting the mixture to a temperature of 100 °C with continuous stirring and reflux.

Once obtained the solution, it is used to generate hybrid electrospun structures by the technique of electrospinning with a horizontal configuration. The solution is introduced in 5 ml syringes connected through Teflon tubes to several 0.9 mm diameter stainless steel needles. The needles are connected to an electrode which in turn is connected to a power source of 0-30 kV. A voltage comprised between 10-12 kV is applied and the solution is pumped through said needles with a flow of 0.6 ml/hr. The counter electrode is connected to a plate (collector) covered with aluminium foil where the electrospun structures are collected, being the distance between needle and plate of about 12 cm. The process is carried out at room temperature. In this way EVOH32 electrospun structures that contain disperse plant cellulose nanofibers are obtained, similar to those obtained in the previous example.

Once the electrospun structures have been generated, and the good incorporation of the desired amount of nanofibers in the same by means of techniques such as FT-IR has been checked, the next step consists of mixing said electrospun structures that contain the disperse plant cellulose nanofibers with the EVOH32 polymeric matrix by means of melt mixing.

For this purpose, the desired amount of EVOH32 in the form of pellets is introduced in an internal mixer operating at 185 °C and 100 rpm. When the polymeric matrix is partially melted, the EVOH32/nanofibers electrospun structures are added and a mixing time of 3 minutes is applied. The amount of pelletized EVOH and electrospun structures shall be such that the concentration of cellulose nanofibers in final nanocomposites is 2% by weight. With the purpose of comparing the final properties of nanocomposites obtained by means of this new technique, a mixing of EVOH32 with the plant cellulose nanofibers in lyophilized powder form was carried out additionally, i.e. without having been previously incorporated in electrospun structures. Therefore, the changes in dispersion and final properties of nanocomposites depending of the mode of incorporation of said nanofibers can be studied. The mixing with the plant cellulose nanofibers lyophilisate was carried out in the same conditions as in the previous case, i.e. by adding the EVOH32 pellets in the internal mixer operating at 185 °C and 100 rpm, with the subsequent addition of the nanofibers lyophilisate by setting a final concentration of the same of 2% and a mixing time of 3 minutes.

The last step consisted of the formation of plastic films by means of compression from the melting at a temperature of 180 °C and slow cooling with air and water from the produced mixtures. DSC tests demonstrated that the addition of plant cellulose nanofibers disperse in electrospun structures represents an important improvement of the final properties obtained in the nanocomposite plastic material in comparison with the method traditionally used, which consists of the incorporation of the nanofibers in the form of lyophilisate (see Table 1).

**Table 1: Glass transition temperature (Tg) of the polymeric matrix.**

| | T_{g} (°C) |
|---|---|
| EVOH32 Film | 60.1 |
| EVOH32 Film+ 2% Cellulose nanofibers (Lyophilized powder) | 60.2 |
| EVOH32 Film+ 2% Cellulose nanofibers (Electrospun structures) | 74.0 |

Thus, increases in the glass transition temperature (Tg) associated with the thermal resistance of the material of the invention of approximately 14 °C for a 2% reinforcement were found. By way of example Figure 3 shows the difference in the dispersion of cellulose nanofibers in EVOH32 nanocomposites obtained by means of the two techniques. As shown in these polarized light microscopy photos, the dispersion of said nanoreinforcements considerably improves (see bottom image in Figure 3) when these are added in dispersed form included in electrospun structures.

### Example 3.

### Incorporation of plant cellulose nanofibers in PLA by melt mixing.

In this case, in the same way as in the previous example, the nanoreinforcement consists of nanofibers extracted from highly purified plant cellulose by means of a treatment with sulphuric acid. To do this, 10 g of plant cellulose are added in 100 ml of sulphuric acid with a concentration of 9.1 M. The acid treatment is carried out at a temperature of 44 °C, with continuous stirring, for 130 minutes. The excess of acid is removed by applying several cycles of centrifugation at 13000 rpm for 10 minutes. In each cycle, the supernatant is removed and deionised water is added to the precipitate for further centrifugation. After several cycles of centrifugation, a turbid supernatant is obtained. This supernatant is neutralized until reaching pH 7 and is subsequently lyophilized.

After the obtainment of the plant cellulose nanofibers from highly purified cellulose, these were lyophilized and dispersed again in water by means of the application of ultrasound. They were then centrifuged at 12500 rpm, 15 °C and 20 minutes, the water was removed from the supernatant by means of decanting and the water was replaced by acetone, which was replaced later using the same method by chloroform (solvent used for the polylactic acid-PLA-). This cycle was repeated 4 times to ensure the complete substitution of the solvent and therefore obtaining plant cellulose nanofibers disperse in the non-polar solvent chloroform. The solution of chloroform with cellulose nanofibers was used to dissolve the PLA pellets, so the final concentration of nanofibers with respect to the weight of PLA in the solution was set at 8%. To improve the electrospinning of the matrices, 20% polyethylene glycol (PEG) and 80% PLA was added, such that both materials represent 5-6% by weight of the chloroform. The solution is introduced in 5 ml glass syringes connected through Teflon tubes to several 0.9 mm diameter stainless steel needles. The needles are connected to an electrode which in turn is connected to a power source of 0-30 kV. A voltage of 12 kV is applied and the solution is pumped through said needles with a flow of 0.6 ml/hr. The counter electrode is connected to a plate (collector) covered with aluminium foil where the electrospun structures are collected, being the distance between needle and plate of about 12 cm. The process is carried out at room temperature. In this way PLA electrospun structures that contain disperse plant cellulose nanofibers are obtained, similar to those obtained in the two previous examples.

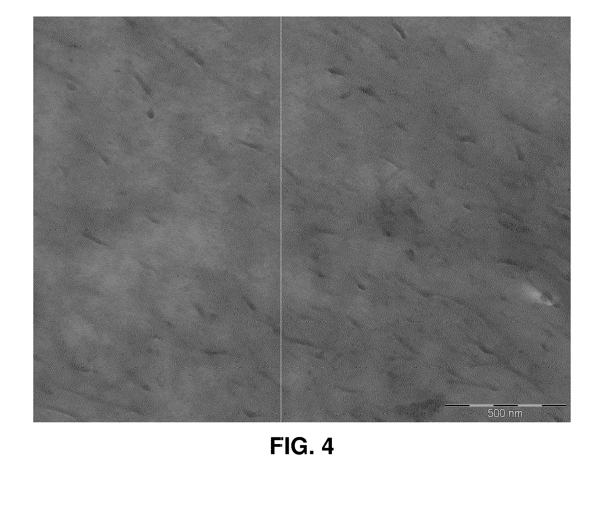

Once the electrospun structures have been generated, and the good incorporation of the desired amount of nanofibers in the same by means of techniques such as FT-IR has been checked, the next step consists of mixing said electrospun structures that contain the disperse plant cellulose nanofibers with the PLA polymeric matrix by means of melt mixing. For this purpose, the desired amount of PLA in the form of pellets is introduced in an internal mixer operating at 155 °C and 60 rpm. When the polymeric matrix is partially melted, the PLA/PEG/cellulose nanofibers electrospun structures are added and a mixing time of 3 minutes is applied. The amount of pelletized PLA and electrospun structures shall be such that the concentration of cellulose nanofibers in final nanocomposites is 2% by weight. Figure 4, which corresponds to a TEM image of the PLA/cellulose nanofibers nanocomposite obtained by means of the melt mixing of PLA pellets with the electrospun structures that contain the disperse nanofibers, shows excellent dispersion of the plant cellulose nanofibers in this type of matrices obtained via this new method.

## Claims

1. Procedure for the obtainment of a nanocomposite comprising a polymeric matrix and a nanoreinforcement, comprising the steps:
(a) mixing of the nanoreinforcement with a polymeric matrix in liquid state,
(b) electrospinning of the dispersion obtained in (a), and
(c) melt mixing of the product obtained in step (b) with a polymeric matrix equal to or different from the one used in step (a).

2. Procedure according to claim 1, comprising a step (d) for the processing of the product obtained in step (c) selected from the list comprising: injection, extrusion, thermoforming, blow moulding, rotational moulding, spinning, casting, calendering, pultrusion and lamination.

3. Procedure according to claim 2, wherein the processing is selected from injection, extrusion or blowing.

4. Procedure according to any of claims 1 to 3, wherein in addition in step (b) and/or (c) is added at least one additive which is selected from plasticizers, emulsifiers, anti-flocculents, processing aids, antistatics, UV light absorbers, antioxidants, cross-linkers, flame retardants, antibacterial or any of their combinations.

5. Procedure according to any of claims 1 to 4, wherein the step (a) is carried out with a solvent which is selected from alcohol, water or any of their combinations.

6. Procedure according to claim 5, wherein the alcohol is isopropanol.

7. Procedure according to any of claims 1 to 6, wherein the polymeric matrix is non-polar.

8. Procedure according to claim 7, comprising a compatibilization pretreatment prior to step (a) comprising the steps:
(i) dissolution of the nanoreinforcement in an aqueous solvent,
(ii) elimination of the aqueous solvent, and
(iii) addition of an organic solvent.

9. Procedure according to claim 8, wherein the elimination of the aqueous solvent of step (ii) is performed by a method selected from decantation, extraction, centrifugation or any of their combinations.

10. Procedure according to any of claims 1 to 9, wherein in step (a) of mixing, the percentage of the polymeric matrix in the solvent is of between 0.1% and 95% by weight.

11. Procedure according to any of claims 1 to 10, wherein the percentage by weight of the nanoreinforcement with respect to the polymeric matrix is of between 0.01 % up to 99%.

12. Procedure according to claim 11, wherein the percentage by weight of the nanoreinforcement in the nanocomposite is of between 0.1 and 60%.

13. Procedure according to any of claims 1 to 12, further comprising a step of acid treatment of the nanoreinforcement prior to step (a) for the obtainment of the nanoreinforcement.

14. Procedure according to any of claims 1 to 13, wherein in step (a) of mixing is included a treatment of homogenization by stirring and/or ultrasound.

15. Procedure according to any of claims 1 to 14, wherein the electrospinning of step (b) is carried out at a distance between the capillary and the support of between 0.1 and 200 cm.

16. Procedure according to claim 15, wherein the electrospinning of step (b) is carried out at a distance between the capillary and the support of between 5 and 50 cm.

17. Procedure according to any of claims 1 to 16, wherein the electrospinning of step (b) is carried out at a deposition rate between 0.001 and 100 ml/hr.

18. Procedure according to claim 17, wherein the electrospinning of step (b) is carried out at a deposition rate between 0.01 and 10 ml/hr.

19. Procedure according to any of claims 1 to 18 wherein the electrospinning of step (b) is carried out by applying a voltage between 0.1 and 1000 kV.

20. Procedure according to claim 19, wherein the applied voltage is between 5 and 30 kV.

21. Procedure according to any of claims 1 to 20, wherein the nanoreinforcement is selected from spherical, fibrillar, tubular, lamellar nanostructures or any of their combinations.

22. Procedure according to claim 21, wherein the fibrillar nanostructures are made of cellulose.

23. Procedure according to any of claims 1 to 22, wherein the polymeric matrix is selected from the list comprising: polyolefins, polyesters, polyamides, polyimides, polyketones, polyisocyanates, polysulphones, styrenic plastics, phenolic resins, amide resins, urea resins, melamine resins, polyester resins, epoxidic resins, polycarbonates, polyvinylpyrrolidones, epoxy resins, polyacrylates, rubbers and gums, polyurethanes, silicones, aramids, polybutadiene, polyisoprenes, polyacrylonitriles, polyvinyl difluoride, polyvinyl acetate, polyvinyl alcohol, ethylene vinyl alcohol, vinyl polychloride, polyvinyldiene chloride, biomass derivatives, proteins, polysaccharides, lipids, biopolyesters or any of their combinations.

24. Nanocomposite obtainable by the procedure described according to any of claims 1 to 23.

25. Use of the nanocomposite according to claim 24, for the obtainment of materials for the automotive, aeronautics, textile plastic, paper and cardboard, toys, footwear, packaging, construction, electronics, pharmaceutical or biomedical industry.
